(19) Europäisches Patentamt
European Patent Office
Office européen des brevets

(11) **EP 3 441 784 B1**

(12) **EUROPÄISCHE PATENTSCHRIFT**

(45) Veröffentlichungstag und Bekanntmachung des Hinweises auf die Patenterteilung:
**13.12.2023   Patentblatt 2023/50**

(21) Anmeldenummer: **17190505.2**

(22) Anmeldetag: **12.09.2017**

(51) Internationale Patentklassifikation (IPC):
**G01S 13/58** (2006.01)   **G01S 13/88** (2006.01)
**G01S 7/35** (2006.01)

(52) Gemeinsame Patentklassifikation (CPC):
**G01S 13/583; G01S 13/88;** G01S 7/356

(54) **VERFAHREN ZUR ERFASSUNG, CHARAKTERISIERUNG UND BEURTEILUNG DER QUALITÄT EINES SPRÜHS UND VORRICHTUNG ZUR ÜBERWACHUNG DER ARBEITSQUALITÄT VON SPRÜHSYSTEMEN**

METHOD FOR DETECTING, CHARACTERIZATION AND ASSESSMENT OF THE QUALITY OF A SPRAY AND DEVICE FOR MONITORING THE QUALITY OF SPRAY SYSTEMS

PROCÉDÉ DE DÉTERMINATION, DE CARACTÉRISATION ET D'ÉVALUATION DE LA QUALITÉ D'UN PULVÉRISATEUR ET DISPOSITIF DE SURVEILLANCE DE LA QUALITÉ DE TRAVAIL DES SYSTÈMES DE PULVÉRISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2017   EP 17185736**

(43) Veröffentlichungstag der Anmeldung:
**13.02.2019   Patentblatt 2019/07**

(73) Patentinhaber: **MSO Messtechnik und Ortung GmbH**
**53902 Bad Münstereifel-Schönau (DE)**

(72) Erfinder:
• **Hien, Dr. Peter**
**53902 Bad Münstereifel (DE)**
• **Krauland, Thorsten**
**53902 Bad Münstereifel (DE)**

(74) Vertreter: **Limbeck, Achim**
**Rechtsanwaltskanzlei Dr. Limbeck**
**Auf dem Schimmerich 11**
**53579 Erpel (DE)**

(56) Entgegenhaltungen:
**EP-A1- 2 756 745     GB-A- 2 514 103**
**US-A- 5 247 307**

• **Douglas Lyon: "The Discrete Fourier Transform, Part 2: Radix 2 FFT", The Journal of Object Technology, 1. Juli 2009 (2009-07-01), Seiten 21-33, XP055480523, DOI: 10.5381/jot.2009.8.5.c2 Gefunden im Internet: URL:http://www.jot.fm/issues/issue_2009_07 /column2.pdf [gefunden am 2018-06-01]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 441 784 B1

**Beschreibung**

Technisches Gebiet

Die vorliegende Erfindung betrifft ein Verfahren zur Erfassung, Charakterisierung und Beurteilung der Qualität eines Sprühs, welches durch Zerstäubung von Flüssigkeiten mittels Düsen unterschiedlichster Ausführungen und konstruktiver Gestaltungsformen mit einer anwendungsspezifischen Tröpfchengrößenverteilung von feinen bis sehr groben Tropfen und unterschiedlichen Geschwindigkeiten hergestellt wird, wobei mittels eines Dauerstrichradars ein auf den Sprüh gerichtetes Radarsignal erzeugt und ein aufgrund des Dopplereffektes am in Bewegung befindlichen Sprüh reflektierte frequenzverschobene Signal empfangen wird.

Darüber hinaus betrifft die vorliegende Erfindung ein Sprühsystem zur Überwachung der Arbeitsqualität von Sprühsystemen aus einer Vielzahl von Düsen durch Bewertung der Abweichung der erfassten Radarsignatur(en) von einer Normalsignatur.

Hintergrund der Erfindung

In einer Vielzahl von Prozessen werden Flüssigkeiten mit gelösten, emulgierten oder dispergierten Komponenten oder Pulver mittels Düsen unterschiedlichster Ausführungen und konstruktiver Gestaltungsformen zerstäubt. Im Weiteren werden hauptsächlich zu einem Sprüh zerstäubte Flüssigkeiten betrachtet.

Die Düsen werden mit einer unter Druck stehenden Flüssigkeit beaufschlagt und erzeugen durch Zerstäuben einen Sprüh mit einer anwendungsspezifischen Tröpfchengrößenverteilung von feinen bis sehr groben Tropfen mit unterschiedlichen Geschwindigkeiten. Im Sprüh weisen grobe Tropfen höhere Geschwindigkeiten als kleine Tropfen auf. Der durch die Zerstäubung entstehende Sprüh soll entsprechend einer gewünschten, meist gleichmäßigen Verteilung auf ein Ziel aufgebracht werden. Der Sprüh soll hinsichtlich seiner Qualitätsparameter einem bestimmten Muster und Vorgaben entsprechen. Qualität ist hier entsprechend der Norm DIN EN ISO 9000:2015-11 als "Grad, in dem ein Satz inhärenter Merkmale eines Objekts Anforderungen erfüllt" zu verstehen. Die unter Qualität subsummierten Merkmale des Sprühs sind dessen Qualitätsparameter.

Qualitätsparameter des Sprühs sind dessen Spritzwinkel, die Höhe des Volumenstroms, die räumliche Volumenstromverteilung, die Tröpfchen- bzw. Partikelgrößenverteilung und die damit zusammenhängende Abdrift, die Geschwindigkeitsverteilung der Tröpfchen beziehungsweise Partikel und die Impulskraft der Tröpfchen sowie deren Verteilung beim Auftreffen auf das Ziel. Die Arbeitsqualität der Düse kann sich im Betrieb durch intrinsische, die Zerstäubung beeinflussende Faktoren wie Abnutzung, Anbackungen und Verstopfung unterschiedlichen Grades bis zu vollständiger Blockade verschlechtern. Des Weiteren kann die Qualität des Sprühs durch eine Vielzahl externer Faktoren wie falsch eingestellter Förderdruck des zu zerstäubenden Materials oder derTragluft, Druckschwankungen, verstopfte Filter, verstopfte oder teilblockierte den Düsen vorgeschaltete Dosierblenden, falsche nicht zur Anwendung passende Auswahl der Düse, unsachgemäße Reinigung der Düsen, Windgeschwindigkeit, Bewegung (Nicken, Gieren) des Gestänges von Sprühsystemen und Turbulenzen aufgrund hoher Fahrgeschwindigkeit negativ beeinflusst werden.

Bisher ist die kontinuierliche berührungslose Erfassung der Qualitätsparameter und des Verteilmusters des Sprühs im Prozess sehr aufwendig bis ungelöst. Dies gilt sowohl für die Zerstäubung durch die einzelne Düse als auch für komplexe Systeme mit einer Vielzahl von Düsen, wie zum Beispiel Pflanzenschutzgeräten. Die Qualitätssicherung von Sprühprozessen ist bisher mit hohem Aufwand nur stichprobenartig von Zeit zu Zeit möglich. Eine kontinuierliche Überwachung und Qualitätssicherung von Sprühprozessen in Echtzeit ist bisher nicht oder nur mit extrem hohem Aufwand möglich. Dies ist von hoher Relevanz für die Effizienz und Präzision industrieller und landwirtschaftlicher Sprühprozesse.

Stand der Technik

Zur Erfassung der Qualitätsparameter des Sprühs einer einzelnen Düse und von Sprühsystemen mit einer Vielzahl von Düsen gibt es unterschiedliche Lösungsansätze und Lösungsvarianten je nach Fragestellung. Unterschiedliche Fragestellungen und Zielgrößen ergeben sich aus den Anwendungen wie: Entwicklung neuartiger Düsen, Anpassungsentwicklung von Düsen, Prüfung und Zulassung von Sprühsystemen sowie stationäre Überprüfung von im Gebrauch befindlichen Sprühsystemen wie zum Beispiel Pflanzenschutzgeräten. Die dem Stand der Technik entsprechenden Messmittel erfassen einzelne oder einige wenige Qualitätsparameter des Sprühs.

Zur Erfassung und Charakterisierung der Winkelverteilung werden diverse linear, kreisförmig, oder sektorförmig aufgebaute so genannte Patternators eingesetzt. Der Sprüh wird hierbei aufgeteilt. Die aufgeteilten Volumenströme werden in einer Vielzahl von Behältern aufgefangen und deren Volumen oder Masse bestimmt. (zum Beispiel: Patent US 6,298,719 B1 Measuring the angular distribution of a liquid spray produced by a fuel injection valve und US020130192385A1 Device for measuring droplet mass flux distributions to test spray injection system and the measuring method). Die inertiale fraktionierende Trennung der Tröpfchengrößen des Sprühs ist mit einem Kaskadenimpaktor beispielsweise Model 20-800 Ambient Cascade Impactor von TISCH Environmental Inc. möglich.

Durch auf beispielsweise mit Gelatine oder Magnesiumoxid beschichtete Platten oder wasser- oder ölsensitives Papier mit Farbumschlag durch die Flüssigkeit (zum Beispiel Kromekote card) werden durch auftreffende Tröpfchen hervorgerufene Abdrücke oder Flecken erfasst. Danach werden diese manuell oder halbautomatisiert vermessen z.B. mit Abtastung durch handelsübliche Flachbettscanner und Auswertung der Tröpfchengrößen und -verteilung durch spezielle Software z.B. DropletScan von Devore Systems Inc..

Die Winkelverteilung des Sprühs kann auch mittels mechanischer Verfahren der flächigen ortsaufgelösten Impulsmessung erfasst werden (beispielsweise Tactilus von SPI Sensor Products Inc.). Hierbei wird die Impulskraft der auftreffenden Tröpfchen ortsaufgelöst mittels eines flächigen Sensorarrays gemessen.

Entsprechend der Verordnung über die Prüfung von Pflanzenschutzgeräten (Pflanzenschutz-Geräteverordnung vom 27. Juni 2013 (BGBl. I S. 1953, 1962)) des Bundesministeriums für Ernährung, Landwirtschaft und Verbraucherschutz und SPISE - Standardised Procedure for the Inspection of Sprayers in Europe - vor dem Hintergrund der Direktive 2009/128/EC erfolgt die Prüfung von Pflanzenschutzgeräten turnusmässig im Betrieb mittels Querverteilungsprüfgeräten. Diese verfügen über eine Reihe von Rinnen, die im rechten Winkelzum Sprühfächerangeordnet sind. Der Volumenstrom wird aufgefangen und das Volumen gemessen. Der Grad der Abweichung der Verteilung über die Arbeitsbreite des Pflanzenschutzgerätes wird meist als Variationskoeffizient angegeben. Querverteilungsprüfgeräte sind zum Beispiel der Horizontal Patternator und Spray Scanner von AAMS Salvarani BVBA.

Optische Messsysteme werden im Rahmen der DIN SPEC 91342 "Charakterisierung von zerstäubten Flüssigkeiten - Bestimmung der relativen Volumenstromdichteverteilung im Spray" eingesetzt. Der ASTM International (ursprünglich American Society for Testing and Materials) Standard E799-03 "Standard Practice for Determining Data Criteria and Processing for Liquid Drop Size Analysis" legt keine Messverfahren sondern vielmehr Prozeduren zur Berechnung der Tröpfchengrößenverteilung fest. Die Guideline der EPA (United States Environmental Protection Agency) OPPTS 840.1100 "Spray Droplet Size Spectrum" zur Erfassung der Tröpfchengrößenverteilung legt kein bestimmtes Messverfahren fest.

Mittels eines scannenden LDV Laser Doppler Velocimetry Verfahrens kann die Geschwindigkeit der Tröpfchen und die Verteilung der Geschwindigkeit der Tröpfchen im Sprüh ermittelt werden.

Ein PDPA Phase Doppler Particle Analyzer beispielsweise von Dantec Dynamics A/S oder TSI Incorporated kombiniert die Messung von Tröpfchengröße und -geschwindigkeit. Eine räumliche Auflösung kann durch Scannen erreicht werden.

Mit einem scannenden Streulichtmesssystem beispielsweise SpraySpy der AOM-Systems Gmbh wird ebenfalls die Volumenstromdichteverteilung als räumliche Verteilung von Tröpfchengröße und -geschwindigkeit des Sprühs messbar. Die Testmethode ist in ASTM E1260-03 "Standard Test Method for Determining Liquid Drop Size Characteristics in a Spray Using Optical Nonimaging Light-Scattering Instruments" festgelegt.

In einem optischen Patternator wird im Sprüh in einer Ebene Fluoreszenz induziert, mit einer Kamera erfasst und in einem Bildverarbeitungssystem analysiert. Hierzu ist dem Sprüh eine fluoreszierende Komponente beizufügen. Ein Beispiel eines mit induzierter optischer Fluoreszenz arbeitenden optischen Patternators ist das System SetScan von En'urga Inc. (US8134703 Apparatus for the quality control of nozzles).

IPI Interferometric Particle Imaging Systeme beispielsweise von Dantec Dynamics A/S messen die Größe und Geschwindigkeit von Tröpfchen im Sprüh.

Die Tröpfchengrößenverteilung kann mittels Laserbeugung (Laser diffraction) beispielsweise mit dem Master-Sizer von Malvern Instruments Ltd. gemessen werden. Die Tröpfchengrößen im Sprüh können ebenfalls durch Bildanalyse der Mie-Streuung (Mie Scattering) gemessen werden.

Die planare Massenverteilung im Sprüh kann mit einem Röntgentomographie Patternator beispielweise SetXvue von En'urga Inc. berührungslos erfasst werden.

Die Kennzeichnung der Tröpfchengrößenverteilung erfolgt häufig durch stark vereinfachende Größen wie den Sauterdurchmesser d32 (stellt die der spezifischen Oberfläche des gesamten Tröpfchenkollektivs entsprechende mittlere Kugelgröße dar) oder die mittlere Tröpfchengröße $d_{50}$. Diese Kennwerte sagen jedoch wenig über die tatsächliche Tröpfchengrößenverteilung aus.

Optische Messverfahren sind bei hohen Volumenströmen des Sprühs und bei optisch dichten Flüssigkeiten wie Emulsionen in ihrer Anwendbarkeit beschränkt.

Allen oben genannten Verfahren ist gemeinsam, dass die Messungen und Auswertungen nicht unter Feld- und Anwendungsbedingungen kontinuierlich im Prozess in Echtzeit erfolgen, sondern meist unter stationären Laborbedingungen. Es werden meist nur ein oder wenige Qualitätsparametererfasst. Die berührungslos (non-intrusive) arbeitenden Verfahren sind sehr aufwendig und nur für Entwicklungs- und Forschungsanwendungen oder zeitweise Prüfung kostenintensiver industrieller Prozesse beispielsweise der Pulverbeschichtung geeignet. Der bisherige Stand der Technik weist darüber hinaus Defizite hinsichtlich der Anwendbarkeit in Prozessen zur Echtzeit Überwachung der Qualität eines Sprühs auf.

Aus der EP 2 756 745 A1 ist ein Verfahren zur Erfassung, Charakterisierung und Beurteilung der Qualität eines Sprühs bekannt, der durch Zerstäubung von Flüssigkeiten mittels Düsen unterschiedlichster Ausführungen und konstruktiver Gestaltungsformen mit einer anwendungsspezifischen Tröpfchengrößenverteilung von feinen bis sehr groben Tropfen und unterschiedlichen Geschwindigkeiten hergestellt wird, wobei mittels eines Dauerstrichradars ein auf den Sprüh gerichtetes Radarsignal erzeugt und ein aufgrund des Dopplereffektes am in Bewegung befindlichen Sprüh reflektierte entsprechend frequenzverschobene Signal empfangen wird, wobei das gesendete und das empfangene Signal mittels eines Mischers gemischt und das dabei entstehende und mittels analog-digital Umsetzung in einer bestimmten Rate abgetastete, niederfrequente Doppler-Schwebungssignal $f_S = |f_O - f_D|$ in einem Datenarray mit dem Index $n = [0,1,2, ..., N]$ gespeichert und aus dem Zeitbereich in einen Frequenzbereich transformiert wird.

In der Veröffentlichung Douglas Lyon: "The Discrete Fourier Transform, Part 2: Radix 2 FFT", The Journal of Object Technology, 1. Juli 2009 (2009-07-01), Seiten 21-33, XP055480523, DOI: 10.5381/jot.2009.8.5.c2. wird eine diskrete und inverse diskrete Fourier-Transformation (DFT) sowie schwerpunktmäßig eine schnelle Implementierung der DFT, genannt FFT (Fast Fourier Transform) und IFFT (Inverse Fast Fourier Transform) beschrieben.

Darstellung der Erfindung

Der vorliegenden Erfindung liegt die Aufgabe zu Grunde, ein Verfahren zu schaffen, welches die vorgenannten Probleme ausräumt und das den Stand der Technik durch Erfassung, Charakterisierung mittels Radarsignatur und Bewertung der Qualität eines Sprühs in Prozessen in Echtzeit verbessert.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Das erfindungsgemäße Verfahren verdichtet hierzu die Informationen über wesentliche Qualitätsparameter eines Sprühs in einer Radarsignatur des Sprühs, nämlich dessen Leistungsdichtespektrum PSD (Power Spectral Density).

Gemäß dem Stand der Technik wird bei dem erfindungsgemäßen Verfahren das gesendete und das empfangene Signal mittels eines Mischers gemischt und das dabei entstehende und mittels analog-digital Umsetzung in einer bestimmten Rate abgetastete, niederfrequente Doppler-Schwebungssignal $f_S = |f_O - f_D|$ in einem Datenarray mit dem Index [0,1,2,...,N] gespeichert und aus dem Zeitbereich in einen Frequenzbereich transformiert.

Hierzu sendet ein Dauerstrichradar CW (Continous Wave) System bestehend aus Sender, Empfänger, Antenne und Mischer ein auf den Sprüh gerichtetes Radarsignal. Aufgrund des Dopplereffektes ist das am in Bewegung befindlichen Messobjekt reflektierte und wieder empfangene Signal $f_d$ frequenzverschoben entsprechend

$$f_S = |f_O - f_D| f_S = |f_O - f_D|$$

$$f_D = 2 \cdot f_O \cdot \frac{v}{c_O} \cdot \cos(\alpha)$$

Das Dauerstrichradar weist einen Mischer auf, der das gesendete Signal $f_O$ und das empfangene Signal $f_D$ mischt und das entstehende niederfrequente Schwebungssignal $f_S$ ausgibt. Die Frequenz $f_S = |xf_O - f_S|$ der Schwebung aus der Mischung von gesendetem Signal $f_O$ und empfangenem Signal $f_D$ ist proportional zur Geschwindigkeit $V$ des bewegten Reflektors beziehungsweise des bewegten Radars bei ortsfestem Reflektor. Konstant sind die Lichtgeschwindigkeit $c_O$ und in der erfindungsgemäßen Anwendung der Anstellwinkel $\alpha$ des Radars zum Messobjekt.

Des Weiteren ist die Amplitude dieses Schwebungssignals $f_S$ proportional zur reflektierten Leistung entsprechend der so genannten Radargleichung

$$\frac{P_e}{P_s} = \frac{g^2 \cdot \lambda^2 \cdot \sigma}{(4\Pi) \cdot D^4}$$

mit $P_e$ Leistung des empfangenen Signals, $P_s$ Sendeleistung, $\lambda$ Wellenlänge, des Sendesignals, $\sigma$ Rückstreuquerschnitt des reflektierenden Objekts / der reflektierenden Objekte, $D$ Abstand Radarsensor zum Objekt, $g$ Antennengewinn bei gleicher Sende-/Empfangsantenne.

Im erfindungsgemäßen Messaufbau sind die Sendeleistung $P_s$, die Wellenlänge $\lambda$ des Sendesignals, der Abstand $D$ des Radarsensors zum Objekt und der Antennengewinn $g$ konstant. Die Leistung $P_e$ des empfangenen Signals und damit des Schwebungssignals aus der Mischung des gesendeten und empfangenen Signals, d.h. die Amplitude des Dopplersignals $f_S$, ist also proportional zum aufgrund der Teilchengrößenverteilung und des Volumenstroms des Sprühs veränderlichen Rückstreuquerschnitts σ (RCS Radar Cross Section).

In einem Prozessüberwachungssystem für eine einzelne Düse oder für die einzelne Düse in einem komplexen Sprühsystem bestehend aus einer Vielzahl von Düsen gleicher Bauart in einem Verband zum Beispiel einem Pflanzenschutzgerät ist ein "Scoring", das heißt eine vergleichende Einordnung oder Bewertung der aktuellen Radarsignatur des Sprühs anhand von Ähnlichkeit beziehungsweise Distanz zu einer Muster- beziehungsweise Soll-Radarsignatur, das heißt einer Normalradarsignatur erforderlich. Die aktuelle Radarsignatur der einzelnen Düse wird hierzu erfindungsgemäß in einem übergeordneten Verarbeitungssystem entweder a) für eine einzelne Düse mittels eines jeweils düsen- und applikationsspezifisch vorab nach einem supervised Machine Learning Verfahren angelernter Normalsignatur oder b) im Prozess für eine einzelne Düse eines Sprühsystems - bestehend aus einer Vielzahl gleichartiger Düsen - mit der Normalsignatur der gemittelten aktuellen Radarsignatur aller Düsen $j = [0,1,2, ...,k]$ des Sprühsystems verglichen und bewertet.

Hierzu (b)) wird die Ähnlichkeit der beiden FFT Datenreihen, das heißt der FFT-Bins $i = [0,1,2, ... , n]$ der aktuellen Radarsignatur der einzelnen Düse und der FFT-Bins $i = [0,1,2,...,n]$ der über alle Düsen $j = [0,1,2,...,k]$ des Sprühsystems gemittelten Normalsignatur analysiert.

Anwendungsspezifisch können auch nur bestimmte Frequenzintervalle gefiltert, das heißt ausgewählte Indices der gepaarten Datenreihen der FFT-Bins analysiert werden beispielsweise zur Eliminierung der Frequenzanteile aufgrund der Fahrgeschwindigkeit.

Hierzu wird der empirische Pearson'sche Maßkorrelationskoeffizient $Kor_e(x,y)$ als Maß der Distanz der beiden gepaarten Datenreihen der FFT-Bins mit den Indices $i = [0,1,2, ...,n]$ der aktuellen Radarsignatur $x$ und der Normalradarsignatur $y$ mit erwartungstreuen Schätzern der Varianzen berechnet mit:

$$Kor_e(x,y) := \frac{\frac{1}{n-1}\sum_{i=1}^{n}(x_i - \bar{x})(y_i - \bar{y})}{\sqrt{\frac{1}{n-1}\sum_{i=1}^{n}(x_i - \bar{x})^2} \cdot \sqrt{\frac{1}{n-1}\sum_{i=1}^{n}(y_i - \bar{y})^2}}$$

Dabei ist $\bar{x} = \frac{1}{n}\sum_{i=1}^{n} x_i$ der empirische Mittelwert der Datenreihe der FFT-bins i = [0,1,2, ...,n] der aktuellen Radarsignatur des Sprühs der einzelnen Düse. Dabei ist $\bar{y} = \frac{1}{n \cdot k}\sum_{j=1}^{k}\sum_{i=1}^{n} y_{ij}$ der empirische Mittelwert aller Datenreihen der FFT-bins $i = [0,1,2,...,n]$ aller Düsen $j = [0,1,2, ..., k]$ des Sprühsystems. Dabei ist $y_i = \frac{1}{k}\sum_{j=1}^{k} y_{ij}$ der über alle Düsen $j = [0,1,2, ...,k]$ des Sprühsystems gemittelte Wert des jeweiligen FFT-bins der Düse das heißt $y_i$ ist der jeweilige FFT-bin Wert $i = [0,1,2, ... , n]$ der Normalsignatur.

Das "Scoring" der aktuellen Radarsignatur ist neben dem angeführten Pearson'schen Maßkorrelationskoeffizienten über weitere Verfahren der Muster- und Ähnlichkeitsanalyse beispielsweise die Fréchet distance möglich.

Die Ableitung des Normalmusters aus den Radarsignaturen aller Düsen eines Sprühsystems ist besonders vorteilhaft weil keine umfangreichen multivariaten Daten zur Ermittlung von Normalsignaturen in Abhängigkeit von Düsenbauformen, Drücken, Fahrgeschwindigkeit etc. erhoben werden müssen, ferner keine a priori Informationen zur Applikation vorliegen müssen und darüber hinaus Änderungen in der Applikation wie Düsentyp, veränderlicher Volumenstrom, Abstand zwischen Düse und zu besprühender Oberfläche sowie Geschwindigkeit bei bewegtem Sprühsystem unmittelbar abgebildet werden.

Kurzbeschreibung der Zeichnungen

Weitere Ziele, Merkmale, Vorteile und Anwendungsmöglichkeiten des erfindungsgemäßen Verfahrens sowie einer Vorrichtung zur Überwachung der Arbeitsqualität von Sprühsystemen ergeben sich aus der nachfolgenden Beschreibung mehrerer Ausführungsbeispiele anhand der Zeichnungen.

Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen

Fig. 1 mittels des erfindungsgemäßen Verfahrens ermittelte Radarsignaturen derselben Flachstrahl Injektordüse mit Dosierblende Teejet AIXR 110025 VP bei niedrigem und bei hohem Druck der Flüssigkeit;

Fig. 2 mittels des erfindungsgemäßen Verfahrens ermittelte Radarsignaturen einer Flachstrahldüse Teejet 8001E-SS im Normalbetrieb ohne Blockade und bei Teilblockade durch eine mittig senkrecht im Düsenmundstück eingesetzte Nadelspitze;

Fig. 3 eine Einzeldüse mit Sprüh und hierzu angeordnetem Radar (Ansicht Seite, von hinten) mit dessen Erfassungsbereich;

Fig. 4 ein Sprühsystem, hier ein Pflanzenschutzgerät, bestehend aus einem Gestänge mit einer flüssigkeitsführenden Rohrleitung mit Düsen.

Ausführung der Erfindung

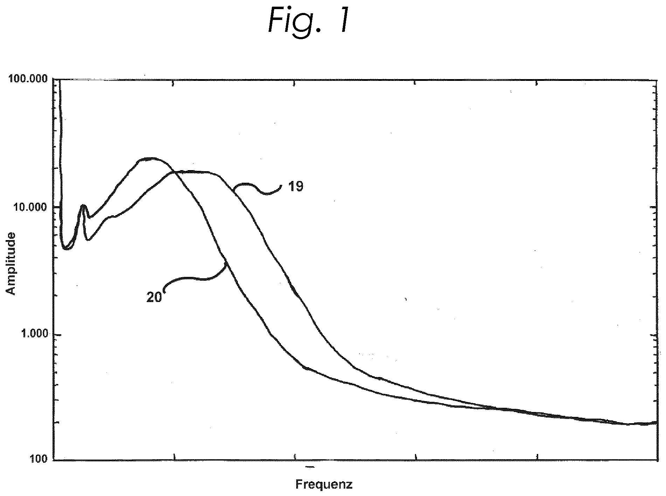

In Fig. 1 sind mittels des erfindungsgemäßen Verfahrens ermittelte Radarsignaturen derselben Flachstrahl Injektordüse mit Dosierblende Teejet AIXR 110025 VP bei niedrigem 19 und bei hohem Druck 20 der Flüssigkeit dargestellt. Die Darstellung der Signalamplituden der FFT-Bins ist log-skaliert. Die Unterschiede der Radarsignaturen hinsichtlich Frequenzen und Signalamplituden über der Frequenz sind hierbei deutlich ersichtlich.

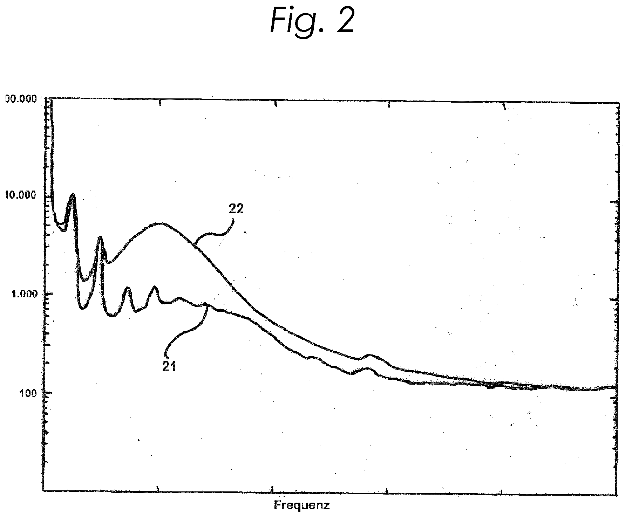

In Fig. 2 sind zwei, mittels des erfindungsgemäßen Verfahrens ermittelte Radarsignaturen einer Flachstrahldüse Teejet 8001E-SS im Normalbetrieb ohne Blockade 22 und bei Teilblockade 21 durch eine mittig senkrecht im Düsenmundstück eingesetzte Nadelspitze dargestellt. Die Darstellung der Signalamplituden der FFT-Bins ist log-skaliert. Die Unterschiede der Radarsignaturen hinsichtlich Frequenzen und Signalamplituden über der Frequenz sind ebenfalls deutlich.

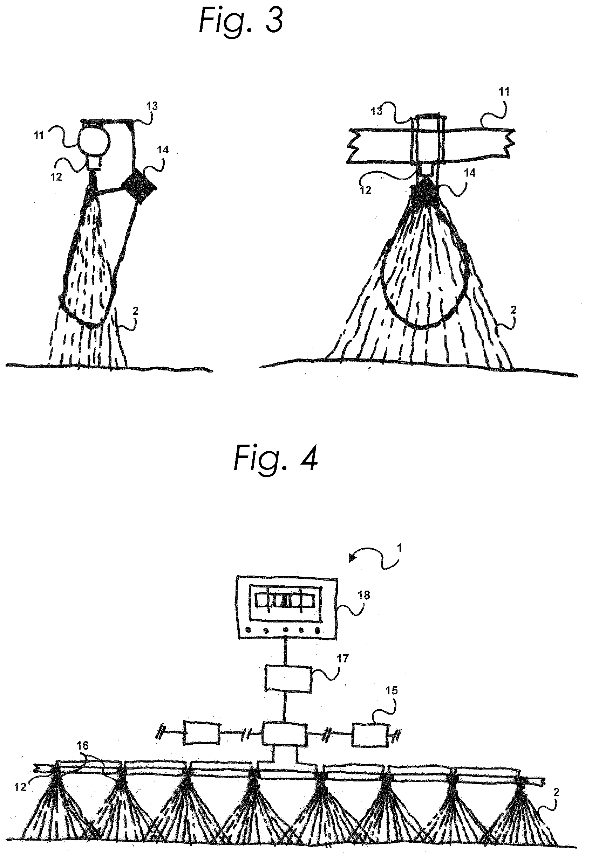

In Fig. 3 ist ein Sprühsystem 1 dargestellt, hier ein beispielhaftes Pflanzenschutzgerät, welches aus einem Gestänge 10 mit einer flüssigkeitsführenden Rohrleitung 11 mit Düsen 12 besteht. Am Gestänge 10 oder der Rohrleitung 11 sind mittels Halter 13 jeweils ein Radarmesskopf 14 einer Düse 12 so zugeordnet, dass das Radar einen weiten Bereich des jeweiligen Sprühs erfasst.

Das Sprühsystem 1 arbeitet vorzugsweise in einem Zeitschlitzverfahren, um Störungen der Radare untereinander zu vermeiden und die gesamte Stromaufnahme des Systems zu reduzieren. Das Sprühsystem 1 ist zur Überwachung von vorzugsweise bis zu 256 Düsen ausgelegt. An einem Verteiler 15 sind mehrere, hier beispielsweise acht Radarmessköpfe 16 angeschlossen. Im Verteiler 15 erfolgen wesentliche Anteile der Verarbeitung wie die Berechnung der FFTs.

Mittels eines seriellen Bussystems werden mehrere Verteiler 15 untereinander sowie mit einer ECU (Electronic Control Unit) 17 Verarbeitungs- und Steuereinheit verbunden und kommunizieren. Die Enumeration der Radarmessköpfe 16 erfolgt bei Systeminitialisierung durch die ECU 17.

An die ECU 17 ist eine Haupteinheit 18 als übergeordnetes System mit Überwachungssoftware und Benutzerschnittstelle über ein serielles Bussystem angeschlossen. Das System, bestehend aus ECU 17, Verteilern 15 und Radarmessköpfen 16 ist hierdurch flexibel adaptierbar und an Erstausrüstersysteme anschließbar. Die Überwachungssoftware in der Haupteinheit analysiert die Ähnlichkeit der erfassten Radarsignaturen und der Normalradarsignatur und warnt bei Abweichungen, die über eine vom Benutzer einstellbare Signalschwelle hinausgehen. Die betreffende(n) Düsennummer(n) wird / werden angezeigt und am betreffenden Verteiler optisch signalisiert.

Liste der Bezugsziffern

| 1  | Sprühsystem          |
|----|----------------------|
| 2  | Sprüh                |
| 10 | Gestänge             |
| 11 | Rohrleitung          |
| 12 | Düsen                |
| 13 | Halter               |
| 14 | Radarmesskopf        |
| 15 | Verteiler            |
| 16 | Radarmessköpfe       |
| 17 | ECU                  |
| 18 | Haupteinheit         |
| 19 | niedriger Druck      |
| 20 | hoher Druck          |
| 21 | blockiert, Teilblockade |

22     oben Blockade

**Patentansprüche**

**1.** Verfahren zur Erfassung, Charakterisierung und Beurteilung der Qualität eines Sprühs (2), der durch Zerstäubung von Flüssigkeiten mittels Düsen (12) unterschiedlichster Ausführungen und konstruktiver Gestaltungsformen mit einer anwendungsspezifischen Tröpfchengrößenverteilung von feinen bis sehr groben Tropfen und unterschiedlichen Geschwindigkeiten hergestellt wird, wobei mittels eines Dauerstrichradars (14) ein auf den Sprüh (2) gerichtetes Radarsignal erzeugt und ein aufgrund des Dopplereffektes am in Bewegung befindlichen Sprüh (2) reflektierte entsprechend

$$f_D = 2 \cdot f_O \cdot \frac{v}{c_O} \cdot \cos(\alpha)$$

frequenzverschobene Signal empfangen wird, wobei das gesendete und das empfangene Signal mittels eines Mischers gemischt und das dabei entstehende und mittels analog-digital Umsetzung in einer bestimmten Rate abgetastete, niederfrequente Doppler-Schwebungssignal $f_S = |f_O - f_D|$ in einem Datenarray mit dem Index $n$ = [0,1,2, ..., $N$] gespeichert und aus dem Zeitbereich in einen Frequenzbereich transformiert wird, **dadurch gekennzeichnet, dass** die aktuelle Radarsignatur einer einzelnen Düse (12) in einem übergeordneten Verarbeitungssystem entweder

a) für eine einzelne Düse mittels einer jeweils düsen- und applikationsspezifisch vorab nach einem supervised Machine Learning Verfahren angelernten Normalsignatur oder
b) im Prozess für eine einzelne Düse (12) eines Sprühsystems (1) - bestehend aus einer Vielzahl gleichartiger Düsen - mit der Normalsignatur der gemittelten aktuellen Radarsignatur aller Düsen (12) j=[0,1,2,...,k] des Sprühsystems (1)

verglichen und bewertet wird.

**2.** Verfahren nach Anspruch 1, **dadurch gekennzeichnet, dass** die Ähnlichkeit der beiden FFT Datenreihen, das heißt der FFT-Bins i=[0,1,2,...,n] der aktuellen Radarsignatur der einzelnen Düse (12) und der FFT-Bins i=[0,1,2,...,n] der über alle Düsen (12) j=[0,1,2,...,k] des Sprühsystems (1) gemittelten Normalsignatur analysiert wird.

**3.** Verfahren nach einem der vorangegangenen Ansprüche 1 oder 2, **dadurch gekennzeichnet, dass** bestimmte Frequenzintervalle gefiltert werden, indem ausgewählte Indices der gepaarten Datenreihen der FFT-Bins analysiert werden, wobei der empirische Pearson'sche Maßkorrelationskoeffizient $Kor_e$ (x,y) als Maß der Distanz der beiden gepaarten Datenreihen der FFT-Bins mit den Indices i=[0,1,2,...,n] der aktuellen Radarsignatur x und der Normalradarsignatur y mit erwartungstreuen Schätzern der Varianzen berechnet werden.

**4.** Verfahren nach Anspruch 3, **dadurch gekennzeichnet, dass** die Berechnung mit

$$Kor_e(x,y) := \frac{\frac{1}{n-1}\sum_{i=1}^{n}(x_i - \bar{x})(y_i - \bar{y})}{\sqrt{\frac{1}{n-1}\sum_{i=1}^{n}(x_i - \bar{x})^2} \cdot \sqrt{\frac{1}{n-1}\sum_{i=1}^{n}(y_i - \bar{y})^2}}$$

erfolgt, wobei $\bar{x} = \frac{1}{n}\sum_{i=1}^{n} x_i$ der empirische Mittelwert der Datenreihe der FFT-bins i=[0,1,2,...,n] der aktuellen Radarsignatur des Sprühs der einzelnen Düse (12) und $\bar{y} = \frac{1}{n \cdot k}\sum_{j=1}^{k}\sum_{i=1}^{n} y_{ij}$ der über alle Düsen (12) j=[0,1,2,...,k] des Sprühsystems (1) gemittelte Wert des jeweiligen FFT-bins der Düse (12) ist, wobei $y_i$ der jeweilige FFT-bin Wert i=[0,1,2,...,n] der Normalsignatur ist.

5. Sprühsystem (1) zur Überwachung der Arbeitsqualität von Sprühsystemen (1) aus einer Vielzahl von Düsen (12) durch Bewertung der Abweichung des/der erfassten Radarsignatur(en) von einer Normalsignatur gemäß dem Verfahren nach einem der vorangegangenen Ansprüche 1 bis 4, umfassend ein oder mehrere Düsen (12) zur Zerstäubung von Flüssigkeiten unterschiedlichster Ausführungen und konstruktiver Gestaltungsformen mit einer anwendungsspezifischen Tröpfchengrößenverteilung von feinen bis sehr groben Tropfen und unterschiedlichen Geschwindigkeiten,
**dadurch gekennzeichnet, dass**
es ein Dauerstrichradar (14) zur Erzeugung eines auf den Sprüh (2) gerichteten Radarsignals und zum Empfangen eines aufgrund des Dopplereffektes am in Bewegung befindlichen Sprüh (2) reflektierten frequenzverschobenen Signals umfasst.

**Claims**

1. Method for detecting, characterizing, and assessing the quality of a spray (2), which is produced by atomizing liquids using nozzles (12) of various designs and structural designs with an application-specific droplet size distribution of fine to very coarse drops and different speeds, using a continuous wave radar (14) generates a radar signal directed at the spray (2) and a correspondingly reflected one due to the Doppler effect on the moving spray (2)

$$f_D = 2 \cdot f_O \cdot \frac{v}{c_O} \cdot \cos(\alpha)$$

and where the frequency-shifted signal is received, the transmitted and the received signal are mixed by means of a mixer, and the resulting low-frequency Doppler levitation signal, which is sampled at a specific rate by means of analogue-digital conversion $f_S = |f_O - f_D|$ $f_S = |f_O\text{-}f_D|$ is stored in a data array with the index $n = [0,1,2, ..., N]$ and transformed from the time domain into a frequency domain,
**characterised in that**
the current radar signature of an individual nozzle (12) in a higher-level processing system either

a) for an individual nozzle by means of a nozzle- and application-specific standard signature learned in advance using a supervised machine learning method or
b) in the process for a single nozzle (12) of a spray system (1) - consisting of a plurality of similar nozzles - with the normal signature of the averaged current radar signature of all nozzles (12) j=[0,1,2,...,k] of the spray system (1)

is compared and evaluated.

2. Method according to claim 1,
**characterised in that**
the similarity of the two FFT data series, i.e. the FFT bins i=[0,1,2,...,n] of the current radar signature of the individual nozzle (12) and the FFT bins i=[0,1,2,...,n] of the normal signature averaged over all nozzles (12) j=[0,1,2,...,k] of the spray system (1) is analysed.

3. A method according to any one of the preceding claims 1 or 2,
**characterised in that**
specific frequency intervals are filtered by analysing selected indices of the paired data series of the FFT bins, calculating the empirical Pearson's measure correlation coefficient $Kor_e$ (x,y) as a measure of the distance of the two paired data series of the FFT bins with the indices i=[0,1,2,...,n] of the current radar signature x and the normal radar signature y with expectation-true estimators of the variances.

4. Method according to claim 3,
**characterised in that**
the calculation with

$$Kor_e(x,y) := \frac{\frac{1}{n-1}\sum_{i=1}^{n}(x_i - \bar{x})(y_i - \bar{y})}{\sqrt{\frac{1}{n-1}\sum_{i=1}^{n}(x_i - \bar{x})^2} \cdot \sqrt{\frac{1}{n-1}\sum_{i=1}^{n}(y_i - \bar{y})^2}}$$

where $\bar{x} = \frac{1}{n}\sum_{i=1}^{n} x_i$ the empirical mean value of the data series of the FFT-bins i=[0,1,2,...,n] of the current radar signature of the spray of the individual nozzle (12) and $\bar{y} = \frac{1}{n \cdot k}\sum_{j=1}^{k}\sum_{i=1}^{n} y_{ij}$ is the value of the respective FFT-bin of the nozzle (12) averaged over all nozzles (12) j=[0,1,2,...,k] of the spray system (1), where $y_i$ is the respective FFT-bin value i=[0,1,2,...,n] of the normal signature.

5. A spray system (1) for monitoring the quality of work of spray systems (1) from a plurality of nozzles (12) by evaluating the deviation of the detected radar signature(s) from a normal signature according to the method according to any one of the preceding claims 1 to 4, comprising one or more nozzles (12) for atomising liquids of the most varied designs and constructive shapes with an application-specific droplet size distribution from fine to very coarse droplets and different velocities,

**characterised in that**
it comprises a continuous wave radar (14) for generating a radar signal directed towards the spray (2) and for receiving a frequency-shifted signal reflected due to the Doppler effect at the spray (2) in motion.


**Revendications**

1. Procédé de détection, de caractérisation et d'évaluation de la qualité d'un vaporisateur (2) qui est produit par pulvérisation de liquides au moyen de buses (12) de types et de formes de construction les plus diverses avec une répartition de la taille des gouttelettes spécifiques à l'application, allant de fines à très grosses gouttes et à des vitesses différentes, un signal radar dirigé sur le vaporisateur (2) étant produit au moyen d'un radar à onde continue (14) et un signal radar correspondant réfléchi sur le vaporisateur (2) en mouvement en raison de l'effet Doppler étant émis

$$f_D = 2 \cdot f_O \cdot \frac{v}{c_O} \cdot \cos(\alpha)$$

le signal émis et le signal reçu étant mélangés au moyen d'un mélangeur et le signal de battement Doppler basse fréquence ainsi obtenu et échantillonné à une fréquence déterminée au moyen d'une conversion analogique-numérique étant transmis à l'unité de traitement de l'information $f_S = |f_O - f_D|$ $f_S = |f_O\text{-}f_D|$ dans un tableau de données avec l'index $n$ = [0,1,2, ... , N] et transformé du domaine temporel en un domaine fréquentiel,
**caractérisé en ce que**
la signature radar actuelle d'une buse individuelle (12) dans un système de traitement supérieur soit

   a) pour une buse individuelle au moyen d'une signature normale apprise au préalable selon un procédé d'apprentissage automatique supervisé, spécifique à chaque buse et à chaque application, ou
   b) dans le processus pour une seule buse (12) d'un système de pulvérisation (1) - constitué d'une pluralité de buses de même type - avec la signature normale de la signature radar actuelle moyenne de toutes les buses (12) j=[0,1,2, ...,k] du système de pulvérisation (1)

est comparé et évalué.

2. Procédé selon la revendication 1,
**caractérisé en ce que**
la similitude des deux séries de données FFT, c'est-à-dire des blocs FFT i=[0,1,2,...,n] de la signature radar actuelle de la buse individuelle (12) et des blocs FFT i=[0,1,2,...,n] de la signature normale moyennée sur toutes les buses (12) j=[0,1,2,...,k] du système de pulvérisation (1) est analysée.

3. Procédé selon l'une des revendications 1 ou 2 précédentes,
   **caractérisé en ce que**
   certains intervalles de fréquence sont filtrés en analysant des indices sélectionnés des séries de données appariées des binaires FFT, le coefficient de corrélation de mesure empirique de Pearson $Kor_e$ (x,y) étant calculé en tant que mesure de la distance des deux séries de données appariées des binaires FFT avec les indices i=[0,1,2,...,n] de la signature radar actuelle x et de la signature radar normale y avec des estimateurs de variance fidèles à l'attente.

4. Procédé selon la revendication 3,
   **caractérisé en ce que**
   le calcul avec

$$Kor_e(x,y) := \frac{\frac{1}{n-1}\sum_{i=1}^{n}(x_i - \bar{x})(y_i - \bar{y})}{\sqrt{\frac{1}{n-1}\sum_{i=1}^{n}(x_i - \bar{x})^2} \cdot \sqrt{\frac{1}{n-1}\sum_{i=1}^{n}(y_i - \bar{y})^2}}$$

où $\bar{x} = \frac{1}{n}\sum_{i=1}^{n} x_i$ la valeur moyenne empirique de la série de données des FFT-bins i=[0,1,2, ...,n] de la signature radar actuelle de la pulvérisation de la buse individuelle (12) et $\bar{y} = \frac{1}{n \cdot k}\sum_{j=1}^{k}\sum_{i=1}^{n} y_{ij}$ est la valeur moyenne sur toutes les buses (12) j=[0,1,2, ...,k] du système de pulvérisation (1) du FFT-bin respectif de la buse (12), $y_i$ étant la valeur FFT-bin respective i=[0,1,2, ...,n] de la signature normale.

5. Système de pulvérisation (1) pour surveiller la qualité de travail de systèmes de pulvérisation (1) à partir d'une pluralité de buses (12) par évaluation de l'écart de la ou des signatures radar détectées par rapport à une signature normale selon le procédé selon l'une des revendications 1 à 4 précédentes, comprenant une ou plusieurs buses (12) pour la pulvérisation de liquides de conceptions et de formes de construction les plus diverses avec une répartition de la taille des gouttelettes spécifique à l'application, allant de gouttes fines à très grosses et à des vitesses différentes,
   **caractérisé en ce que**
   il comprend un radar à onde continue (14) pour générer un signal radar dirigé vers le pulvérisateur (2) et pour recevoir un signal décalé en fréquence réfléchi par l'effet Doppler sur le pulvérisateur (2) en mouvement.

# Fig. 1

# Fig. 2

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6298719 B1
- US 020130192385 A1
- US 8134703 B
- EP 2756745 A1

**In der Beschreibung aufgeführte Nicht-Patentliteratur**

- **VERÖFFENTLICHUNG DOUGLAS LYON.** The Discrete Fourier Transform, Part 2: Radix 2 FFT. *The Journal of Object Technology,* 01. Juli 2009, 21-33